# EUROPEAN PATENT APPLICATION

(11) **EP 3 225 876 A1**
(43) Date of publication of application: **04.10.2017**
(21) Application number: 15864148.0
(22) Date of filing: 24.11.2015
(51) Int. Cl.: F16F 15/04, B32B 1/06, B32B 7/02, B32B 27/20, C08K 3/04, C08K 3/22, C08K 3/28, C08L 61/06, C08L 101/00, F16F 1/40

(54) **SEISMIC ISOLATION DEVICE**

(30) Priority: 28.11.2014 JP 2014241300; 06.01.2015 JP 2015001197
(71) Applicant: Oiles Corporation, Tokyo 108-0075 (JP)
(72) Inventor: WAKE, Tomotaka, Ashikaga-shi, Tochigi 326-0327 (JP)
(74) Representative: J A Kemp
(86) International application number: PCT/JP2015/005831
(87) International publication number: WO 2016/084363

(57) **Abstract**

A vibration isolation apparatus 1 includes: a laminated elastic body 8 in which elastic layers 3 and rigid layers 7 are alternately laminated and a circularly columnar body 14 which is constituted by damping bodies 12 press-fitted in a circularly columnar hollow portion 11 of the laminated elastic body 8, wherein each of the damping bodies 12 contains a thermally conductive filler, a graphite, and a thermosetting resin.

## Description

### TECHNICAL FIELD

The present invention relates to a seismic isolation apparatus having a damping body.

### BACKGROUND ART

As is known from Patent documents 1 and 2, a seismic isolation apparatus including a laminated elastic body, in which elastic layers and rigid layers are alternately laminated, and a lead plug filled in a circularly columnar hollow portion defined by an inner peripheral surface of the laminated elastic body, is installed between the ground and a superstructure such that after the load of the superstructure is supported, the transmission of the ground vibrations to the superstructure due to an earthquake or the like is prevented as practically as possible by the laminated elastic body, and the vibrations transmitted to the superstructure are attenuated as speedily as possible by the lead plug.

Such a lead plug used in the seismic isolation apparatus extremely excels as a vibrational energy absorbing body since the lead plug satisfactorily absorbs vibrational energy, is easily recrystallized by heat generated in conjunction with the absorption of vibrational energy even after plastic deformation, and does not cause mechanical fatigue.

### PRIOR ART DOCUMENTS

### PATENT DOCUMENTS

- Patent Document 1:: JP-A-9-105440
- Patent Document 2:: JP-A-2000-346132
- Patent Document 3:: JP-A-2009-133481

### SUMMARY OF THE INVENTION

### PROBLEMS THAT THE INVENTION IS TO SOLVE

However, since the specific gravity of lead is extremely large, as is well known, with the seismic isolation apparatus in which the lead plug is incorporated in the laminated elastic body, there are problems in that extremely large labor is required in its transportation to an installation site and its installation to the structure, and that it is impossible to obtain bearing pressure dependence, i.e., the characteristic of being able to exhibit a vibration isolating effect corresponding to superstructures varying in the weight which is supported.

Patent Document 3 proposes a seismic isolation apparatus incorporating a plug fabricated from a composition in which a powder such as iron powder is compounded in an elastomer composition. Even in such a seismic isolation apparatus, however, consideration is not paid to the bearing pressure dependence.

The present invention has been devised in view of the above-described aspects, and its object is to provide a seismic isolation apparatus which has various dependences with respect to the vibration isolating effect, e.g., stable strain dependence, temperature dependence, and bearing pressure dependence, in which a change in the yield load with respect to repeated vibration is small, and which displays stable energy absorbing performance with respect to repeated vibration in long-period earthquakes.

### MEANS FOR SOLVING THE PROBLEMS

A seismic isolation apparatus in accordance with the present invention comprises: a laminated elastic body in which rigid layers and elastic layers are alternately laminated and a columnar body, preferably a circularly columnar body, constituted by a damping body and disposed in at least one columnar hollow portion, preferably a circularly columnar hollow portion, defined by an inner peripheral surface of at least the laminated elastic body, wherein the damping body contains a thermally conductive filler, a graphite, and a thermosetting resin.

Further, a seismic isolation apparatus in accordance with the present invention comprises: a laminated elastic body in which rigid layers and elastic layers are alternately laminated and a columnar body, preferably a circularly columnar body, which is disposed in at least one columnar hollow portion, preferably a circularly columnar hollow portion, defined by an inner peripheral surface of at least the laminated elastic body and is constituted by a plurality of damping bodies laminated in an axial direction of the columnar hollow portion, preferably the circularly columnar hollow portion, wherein the damping body contains a thermally conductive filler, a graphite, and a thermosetting resin.

According to the seismic isolation apparatus in accordance with the present invention, since the damping body contains a thermally conductive filler for damping through mutual friction the repeated shear deformation caused by vibrations applied thereto, a graphite for damping through friction with at least the thermally conductive filler the repeated shear deformation caused by the vibrations which are likewise applied thereto, and a thermosetting resin which is cured at high temperature and bonds the damping bodies to each other for retaining the initial shape of the damping bodies, in an earthquake acting for a long period of time, the thermosetting resin is not melted even if a temperature rise occurs in the damping bodies in consequence of energy absorption. Therefore, it is possible to avoid a flow phenomenon having low friction between mutual ones of materials of the thermally conductive filler and between the thermally conductive filler and the graphite due to the melting of the thermosetting resin, and the intrinsic damping effect based on the mutual friction of the thermally conductive filler itself and the friction between the graphite and the thermally conductive filler can be maintained on a continuous basis irrespective of the temperature rise, with the result that a decline of the energy absorbing performance is not caused after the curing.

In addition, according to the seismic isolation apparatus of the present invention including a columnar body which is disposed in the columnar hollow portion and is constituted by a plurality of damping bodies laminated in an axial direction of the columnar hollow portion, it is possible to obtain satisfactory displacement follow-up performance of the columnar body through the relative displacement among the damping bodies as well as the shear (flexural) deformation in the respective damping bodies.

In the present invention, as for the thermosetting resin, its shape retainability with respect to the damping bodies is released by the shear deformation of the damping bodies during an initial earthquake, while the pulverization and granulation thereof take place due to the shear deformation after the curing. As a result, after the curing and in subsequent earthquakes, through the mutual friction of materials of the thermosetting resin itself and the mutual friction between the thermally conductive filler and the graphite, the thermosetting resin similarly contributes to the damping of the repeated shear deformation effected by the thermally conductive filler and the graphite.

Since the thermally conductive filler has, in addition to the damping effect, the shape retaining effect for retaining the shape of the damping bodies and the heat dissipation effect for dissipating the frictional heat generated in the damping bodies, the thermally conductive filler is able to prevent the columnar body from losing its shape during fabrication and after the shear deformation and prevent a temperature rise of the columnar body during an earthquake.

The thermally conductive filler in a preferred example includes one kind or two or more kinds of metal oxides such as aluminum oxide (Al₂O₃), calcium oxide (CaO₂), magnesium oxide (MgO), zinc oxide (ZnO), titanium oxide (TiO₂), silicon oxide (SiO₂), iron oxide (Fe₂O₃), nickel oxide (NiO), and copper oxide (CuO), metal nitrides such as boron nitride (BN), aluminum nitride (AlN), and silicon nitride (Si₃N₄), metal carbides such as boron carbide (B₄C), aluminum carbide (Al₄C₃), silicon carbide (SiC), and titanium carbide (TiC), and metal hydroxides such as aluminum hydroxide [Al(OH)₃], magnesium hydroxide [Mg(OH)₂], sodium hydroxide (NaOH), calcium hydroxide [Ca(OH)₂], and zinc hydroxide [Zn(OH)₂]. Among others, particles of magnesium oxide, aluminum oxide, silicon oxide, aluminum nitride, silicon nitride, boron nitride, silicon carbide, and the like are more preferable as thermally conductive fillers since they are high in thermal conductivity and in the light of diffusibility.

The thermally conductive fillers preferably have an average particle size of from 10 µm to 50 µm In particular, in a thermally conductive filler obtained by compounding particles having different granularities, for example, particles of a metal oxide having fine granularity with an average particle size of 10 µm or thereabouts and particles of a metal oxide having coarse granularity with the average particle size of 50 µm or thereabouts at a ratio of 50 : 50 or 40 : 60, gaps among the dispersed particles of the metal oxide having coarse granularity with the average particle size of 50 µm or thereabouts are filled by the particles of the metal oxide having fine granularity with an average particle size of 10 µm or thereabouts, so that continuity of the particles of the metal oxides is obtained and heat dissipation is enhanced. Furthermore, heat dissipation is enhanced in a thermally conductive filler obtained by compounding particles of different metal oxides, for example, particles of aluminum oxide and particles of magnesium oxide at a ratio of 50 : 50.

The compounding ratio of the thermally conductive filler selected from among the particles of the metal oxide, metal nitride, metal carbide, metal hydroxide, and metal carbide with respect to the damping body is preferably 37 to 70 vol.%. If the compounding ratio is less than 35 vol.%, instability is entailed in the damping property evaluated by the area of a region surrounded by a hysteresis (history) curve, whereas if the compounding ratio exceeds 70 vol.%, the moldability of the damping body is deteriorated, making it difficult to fabricate the damping body of a desired shape, e.g. a disk-like shape (circular plate shape) or a circularly columnar shape.

The graphite is preferably constituted by at least one of an artificial graphite and a natural graphite such as a scaly graphite. The scaly graphite as a preferable example of the graphite has a flaky shape and has a large surface area in comparison with a granular graphite, so that the scaly graphite effectively exhibits the action of attenuating an external force such as vibration and impact by virtue of its interlayer sliding friction and its friction with the thermally conductive filler which occur when the damping body is subjected to the external force such as vibration and impact. As the graphite, one whose average particle size exceeds 100 µm is preferably used, whereas, as the scaly graphite, one is used which has an average particle size of preferably 100 µm to 1000 µm, more preferably 500 µm to 700 µm, and has a particle size with a large contact area.

The compounding ratio of the graphite, particularly the scaly graphite, with respect to the damping body is preferably 5 to 50 vol.%. If the compounding ratio is less than 5 vol.%, sufficient frictional damping is not exhibited, whereas if the compounding ratio exceeds 50 vol.%, there is a possibility of deteriorating the moldability of the damping body. Even if the damping body can be molded, the strength of the damping body is caused to decline, and fragility is manifested.

The thermosetting resin imparts adhesiveness and compression moldability to the forming material of the damping body. For example, in the damping body containing the thermosetting resin, the thermosetting resin exhibits the effect of reducing its porosity and improves the durability. The compounding ratio of the thermosetting resin with respect to the damping body is preferably 10 to 30 vol.%. If the compounding ratio is less than 10 vol.%, it is difficult to impart sufficient adhesiveness to the forming material of the damping body, whereas if the compounding ratio exceeds 30 vol.%, there is a possibility of deteriorating the kneading processability and moldability of the forming material of the damping body.

The thermosetting resin preferably contains a phenolic resin. As phenolic resins, it is possible to cite, among others, resol type phenolic resins obtained by reacting a phenol of various types with formaldehyde in the presence of an alkali catalyst and novolac type phenolic resins obtained by reacting them in the presence of an acid catalyst. Specifically, it is possible cite, among others, "RESITOP (alkylphenol resin having an alkyl group with a carbon number of 8): softening point 78 to 105°C" manufactured by Gunei Chemical Industry Co., Ltd..

In a preferred example, the damping body contains 35 to 70 vol.% of the thermally conductive filler, 5 to 50 vol.% of the graphite, and 10 to 30 vol.% of the thermosetting resin.

In the seismic isolation apparatus in accordance with the present invention, the damping body may further comprise as other components at least one of a crystalline polyester resin and at least one rubber powder of vulcanized rubber and silicone rubber. The compounding ratio of the rubber powder with respect to the component composition of the damping body is preferably not more than 40 vol.%, more preferably 7 to 30 vol.%, and the compounding ratio of the crystalline polyester resin with respect to the component composition of the damping body is preferably not more than 25 vol.%, more preferably 3 to 22 vol.%.

The rubber powder, particularly the vulcanized rubber powder, plays a role in promoting the movability of the damping body by imparting flexibility to the damping body obtained by molding and in increasing the amount of energy absorbed. As the vulcanized rubber powder, a pulverized powder is preferably used which has an average particle size of 90 µm and is formed by pulverizing a vulcanized rubber of such as natural rubber (NR), polyisoprene rubber (IR), polybutadiene rubber (BR), styrene-butadiene rubber (SBR), chloroprene rubber (CR), ethylene-propylene rubber (EPM, EPDM), nitrile rubber (NBR), butyl rubber (IIR), halogenated butyl rubber, acrylic rubber (ACM), ethylene vinyl acetate rubber, or an ethylene-methyl acrylate copolymer. One kind or two or more kinds of these vulcanized rubber powders are selected for use.

The silicone rubber is an inorganic rubber and has excellent characteristics in heat resistance, cold resistance, weather resistance, electrical insulation, flame resistance, non-toxicity, and the like. As the silicone rubber, it is possible to cite as preferred examples methyl silicone rubber (MQ), vinyl methyl silicone rubber (VMQ), and phenyl methyl silicone rubber (PMQ).

The compounding ratio of the rubber powder is preferably not more than 40 vol.%, more preferably 7 to 30 vol.%, with respect to the damping body constituted of a thermally conductive filler, a graphite or particularly a scaly graphite, and a thermosetting resin, or the damping body constituted of a thermally conductive filler, a graphite or particularly a scaly graphite, a thermosetting resin, and a crystalline polyester resin.

As the crystalline polyester resins, it is possible to cite, for example, aliphatic polyesters including polyglycolic acid, polylactic acid, polycaprolactone, and polyethylene succinate, semiaromatic polyesters such as polyethylene terephthalate, polytrimethylene terephthalate, polybutylene terephthalate, polyethylene naphthalate, polybutylene naphthalate, and polycyclohexane dimethylene terephthalate, and an ester-based elastomer. As specific examples of the crystalline polyester resin, it is possible to cite, among others, "Byron GM900," "Byron GM920," and "Byron GM990" manufactured by Toyobo Co., Ltd. (the listed names are trade names). The molecular weight of the crystalline polyester resin is preferably 10000 to 35000, more preferably 15000 to 30000.

The "average particle size" herein means a particle size at an integrated value of 50% in the particle size distribution obtained by the laser diffraction/scattering method.

In a preferred example, the columnar body which is constituted by the damping body disposed in the columnar hollow portion, preferably press-fitted in the columnar hollow portion, is adapted to support the load in the laminated direction together with the laminated elastic body. In substitution of this arrangement, however, the columnar body may be solely adapted to absorb vibrational energy.

In the present invention, the rigid layers having rigidity and the elastic layers having elasticity are, in a preferred example, annular, but may alternatively be polygonally, e.g., quadrangularly, annular. In the case where the columnar hollow portion is singular, the laminated elastic body is cylindrical in normal cases, but in the case where the rigid layers and the elastic layers are annular, the laminated elastic body is circularly cylindrical. Alternatively, however, in the case where the rigid layers and the elastic layers are polygonally, e.g., quadrangularly, annular, the laminated elastic body may be quadrangularly cylindrical.

In the present invention, the columnar hollow portion may be either singular or plural, and in the case where a plurality of columnar hollow portions are defined by the inner peripheral surface of the laminated elastic body, the columnar body constituted by the damping body in accordance with the present invention need not be disposed in all the columnar hollow portions, and the columnar body constituted by the damping body may be disposed preferably by being press-fitted in some columnar hollow portions in the light of the required functions and effects. Furthermore, in the case where the columnar body disposed in the single or the plurality of columnar hollow portions is constituted by a plurality of damping bodies, not all the plurality of damping bodies need be constituted by the damping bodies in accordance with the present invention, and some damping bodies may be the damping bodies in accordance with the present invention.

### ADVANTAGES OF THE INVENTION

According to the present invention, it is possible to provide a seismic isolation apparatus which has stable strain dependence, temperature dependence, and bearing pressure dependence, in which a change in the yield load with respect to repeated vibration is small, and which displays stable energy absorbing performance with respect to repeated vibration in long-period earthquakes.

### BRIEF DESCRIPTION OF THE DRAWINGS

Fig. 1 is an explanatory vertical cross-sectional view of a preferred embodiment of a seismic isolation apparatus in accordance with the present invention;
Fig. 2 is an explanatory plan view of a laminated elastic body in the embodiment shown in Fig. 1;
Fig. 3 is an explanatory perspective view of a circularly columnar body in the embodiment shown in Fig. 1;
Fig. 4 is a view explaining the operation of the embodiment shown in Fig. 1;
Fig. 5 is an explanatory view illustrating the relationship between horizontal displacement and horizontal load in the embodiment shown in Fig. 1;
Fig. 6 is an explanatory view illustrating test results on the relationship between horizontal displacement and horizontal load in the embodiment shown in Fig. 1 at a vertical bearing pressure of 15 MPa;
Fig. 7 is an explanatory view illustrating test results on the relationship between the number of vibrations and the yield load retention ratio; and
Fig. 8 is an explanatory view illustrating test results on the relationship between the number of vibrations and the yield load retention ratio.

### MODE FOR CARRYING OUT THE INVENTION

Next, a more detailed description will be given of the present invention on the basis of the preferred embodiment illustrated in the drawings. It should be noted that the present invention is not limited to the embodiment.

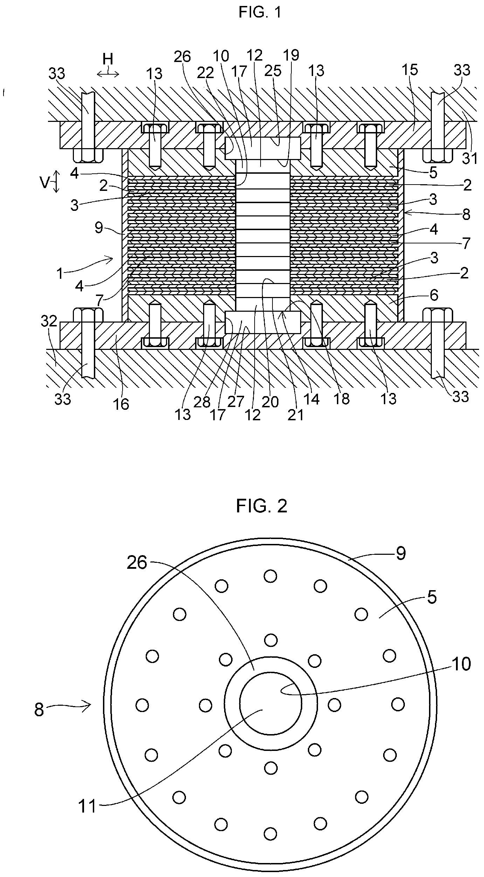

In Figs. 1 to 3, a seismic isolation apparatus 1 in accordance with the present invention is comprised of a circularly cylindrical laminated elastic body 8 in which a plurality of elastic layers 3 formed of elastic plates 2 made of annular rubber or the like and a plurality of rigid layers 7 having thin-walled rigid steel plates 4 and thick-walled rigid steel plates 5 and 6, which are formed of annular rigid metal plates or the like, are alternately laminated by being vulcanized to each other; a circularly cylindrical cladding layer 9 for cladding the outer peripheral surface of the laminated elastic body 8; a circularly columnar body 14 which is press-fitted in a circularly columnar hollow portion 11 defined by a circularly columnar inner peripheral surface 10 of the laminated elastic body 8 and is formed of a plurality of disk-like (circular plate-shaped) damping bodies 12 tightly laminated in an axial direction (vertical direction) V of the circularly columnar hollow portion 11; an upper flange plate 15 and a lower flange plate 16 respectively connected to the thick-walled rigid steel plates 5 and 6 by bolts 13; and disk-like (circular plate-shaped) shear keys 17 for respectively fixing the upper flange plate 15 and the lower flange plate 16, on the one hand, and the thick-walled rigid steel plates 5 and 6, on the other hand, to each other in a shearing direction (horizontal direction) H at an upper surface and a lower surface of corresponding ones of the damping bodies 12 which are located at an upper end and a lower end of the circularly columnar hollow portion 11. The circularly columnar hollow portion 11 with the plurality of damping bodies 12 disposed therein by being densely stacked in multiple layers is defined by, in addition to the inner peripheral surface 10, an upper surface 18 of the lower shear key 17 and a lower surface 19 of the upper shear key 17.

The thick-walled rigid steel plates 5 and 6 with the elastic layer 3 and the thin-walled rigid steel plates 4 sandwiched therebetween in the axial direction V are respectively disposed on the upper and lower end face sides of the laminated elastic body 8, and the damping body 12 located at a lowermost end of the circularly columnar hollow portion 11 is disposed in close contact with the inner peripheral surface of the thick-walled rigid steel plate 6 defining the lower end portion of the circularly columnar hollow portion 11, while the damping body 12 located at an uppermost end of the circularly columnar hollow portion 11 is disposed in close contact with the inner peripheral surface of the thick-walled rigid steel plate 5 defining the upper end portion of the circularly columnar hollow portion 11.

Each damping body 12 is defined by one circular end face 20, another circular end face 21 opposing the one end face 20, and a circularly cylindrical side surface 22 bridging the one end face 20 and the other end face 21. The one end face 20 of the damping body 12 located at the uppermost end is in close contact with the lower surface 19 of the upper shear key 17 fitted to the respective ones of the upper flange plate 15 and the thick-walled rigid steel plate 5 in a circular recess 25 of the upper flange plate 15, on the one hand, and in a circular recess 26 of the thick-walled rigid steel plate 5, on the other hand. Meanwhile, the other end face 21 of the damping body 12 located at the lowermost end is in close contact with the upper surface 18 of the lower shear key 17 fitted to the respective ones of the lower flange plate 16 and the thick-walled rigid steel plate 6 in a circular recess 27 of the lower flange plate 16, on the one hand, and in a circular recess 28 of the thick-walled rigid steel plate 6, on the other hand. Each of the other damping bodies 12 excluding the damping bodies 12 located at the uppermost end and the lowermost end is in close contact with the other end face 21 and the one end face 20 of the adjacent damping bodies 12. Each of the damping bodies 12 is adapted to absorb the energy of shear (flexural) deformation by the relative shear deformation of the other end face 21 with respect to the one end face 20 in the horizontal direction H which is a parallel direction to the one end face 20, to thereby attenuate the shear deformation.

Such a seismic isolation apparatus 1 is fixed such that the upper flange plate 15 side is connected to a superstructure 31 and the lower flange plate 16 side is connected to a foundation 32 which is a substructure by means of bolts 33, respectively. Thus, the seismic isolation apparatus 1 disposed between the superstructure 31 and the foundation 32 is adapted to support the load of the superstructure 31 in the laminated direction (vertical direction) V by the laminated elastic body 8 and the circularly columnar body 14.

Each of the damping bodies 12 basically contains a thermally conductive filler, a graphite, and a thermosetting resin which mainly functions as an adhesiveness imparting agent.

The respective damping bodies 12 are fabricated as follows: A thermally conductive filler, a scaly graphite as a graphite, and a thermosetting resin powder, or components in which at least one of a rubber powder and a crystalline polyester resin is further added to those components are weighed to a predetermined ratio of amounts, and they are charged into an agitating mixer such as a mixer and are agitated and mixed uniformly. This mixture is charged into a kneader, and is heated and kneaded. The damping body material thus heated and kneaded is filled into a circularly columnar hollow portion of a mold heated to a temperature of from 80 to 150°C, and is subjected to compression molding under a molding pressure of 10 to 100 N/mm². After the compression molding, the damping body material is gradually cooled while maintaining the pressurized state in the circularly columnar hollow portion of the mold, and is then removed from the circularly columnar hollow portion of the mold.

To manufacture the seismic isolation apparatus 1 having the circularly columnar body 14 formed by stacking the disk-like (circular plate-shaped) damping bodies 12 in multiple layers, the elastic plates 2 formed of annular rubber plates or the like each having a circular hole in a central portion and the thin-walled rigid steel plates 4 formed of annular rigid metal plates or the like each having a circular hole in a central portion are alternately laminated, the thick-walled rigid steel plates 5 and 6 formed of annular rigid metal plates or the like each having a circular hole in a central portion are disposed on the lowermost surface and the uppermost surface of the laminated assembly, and these are fixed to each other by vulcanization under pressure in a mold, to thereby prepare the circularly cylindrical laminated elastic body 8 having the circularly columnar hollow portion 11 in a central portion. Subsequently, the plurality of disk-like (circular plate-shaped) damping bodies 12 are press-fitted and laminated in the circularly columnar hollow portion 11 so as to form in the circularly columnar hollow portion 11 the circularly columnar body 14 constituted by the plurality of disk-like (circular plate-shaped) damping bodies 12. The press-fitting of the damping bodies 12 is effected by consecutively pressing each of the plurality of disk-like (circular plate-shaped) damping bodies 12 into the circularly columnar hollow portion 11 by a hydraulic ram or the like such that gaps are not produced for the disk-like (circular plate-shaped) damping bodies 12 with respect to the inner peripheral surface 10 of the laminated elastic body 8. After the press-fitting of the damping bodies 12, the shear keys 17 are respectively disposed at the lower end portion and the upper end portion of the circularly columnar hollow portion 11 such that the upper surface 18 thereof and the lower surface 19 thereof are respectively brought into contact with the one end face 20 of the damping body 12 located at the lowermost end and with the other end face 21 of the damping body 12 without a gap, and the upper and lower flange plates 15 and 16 are respectively mounted on the thick-walled rigid steel plates 5 and 6 by means of the bolts 13. It should be noted that, in the formation of the laminated elastic body 8 by vulcanization under pressure in the mold, the cladding layer 9 formed of rubber or the like may be integrally formed on the elastic layers 3 formed of the elastic plates 2 in such a manner as to cover the outer peripheral surfaces of the thin-walled rigid steel plates 4 and the thick-walled rigid steel plates 5 and 6.

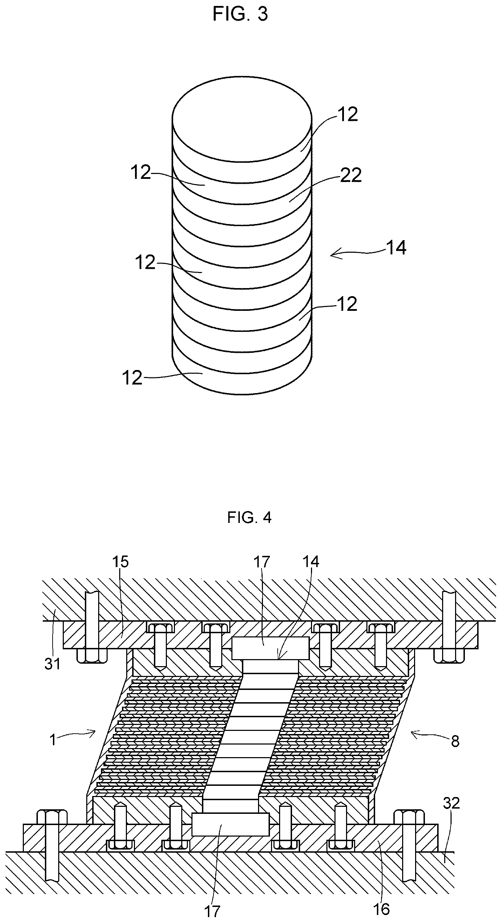

With the seismic isolation apparatus 1, the plurality of disk-like (circular plate-shaped) damping bodies 12 stacked in multiple layers along the axial direction of the circularly columnar hollow portion 11 are press-fitted in the circularly columnar hollow portion 11, and when the superstructure 31 is moved in the horizontal direction H with respect to the foundation 32 owing to vibration, impact, or the like and is subjected to a shearing force in the horizontal direction H, as shown in Fig. 4, the damping bodies 12 undergo shear deformation in the horizontal direction H together with the laminated elastic body 8 and absorbs the vibrational energy in the horizontal direction H, thereby making it possible to speedily attenuate the external force such as vibration and impact. The seismic isolation apparatus 1 having the circularly columnar body 14, in which the disk-like (circular plate-shaped) damping bodies 12 manufactured from the damping body material constituted of the thermally conductive filler, the scaly graphite as the graphite, and the thermosetting resin, or from the damping body material in which at least one of the rubber powder and the crystalline polyester resin is added to those components are stacked in multiple layers and press-fitted in the circularly columnar hollow portion 11, exhibits characteristics of stable strain dependence, temperature dependence, and bearing pressure dependence, and displays stable performance with respect to repeated vibration in long-period earthquakes.

### [Examples]

### Example 1 to Example 10

A thermally conductive filler, a scaly graphite as a graphite, and a phenolic resin as a thermosetting resin, or components in which at least one of a rubber powder and a crystalline polyester resin was added to those components were weighed to compounding ratios (vol.%) shown in Table 1 and Table 2, and they were charged into an agitating mixer such as a mixer. A mixture obtained by uniformly agitating and mixing them was charged into a kneader heated to a temperature of 120°C and was kneaded while being heated, thereby fabricating the damping body material. This damping body material was filled into the circularly columnar hollow portion of a mold heated to a temperature of 120°C, and was subjected to compression molding under a molding pressure of 60 N/mm². After the compression molding, the damping body material was gradually cooled in the circularly columnar hollow portion of the mold while maintaining the pressurized state, and after it was cooled down to room temperature, a 10 mm-long disk-like (circular plate-shaped) damping body 12 having a diameter *φ* of 50mm was taken out from the circularly columnar hollow portion of the mold.

**[Table 1]**

| | | | | Examples | | | | | |
|---|---|---|---|---|---|---|---|---|---|
| | | | | 1 | 2 | 3 | 4 | 5 | 6 |
| < thermally conductive filler> | | av. particle dia. | | | | | | | |
| MgO | | 10 µm | | 25.9 | | | 23.3 | 23.3 | |
| | | 50 µm | | 39.1 | | | 35.1 | 35.1 | |
| Al₂O₃ | | 10 µm | | | 25.9 | | | | 23.3 |
| | | 50 µm | | | 39.1 | | | | 35.1 |
| Si₃N₄ | | 10 µm | | | | 25.9 | | | |
| SiC | | 10 µm | | | | 39.1 | | | |
| <Scaly graphite> | | | | | | | | | |
| av. particle dia.: 650 µm | | | | 16.9 | 16.9 | 16.9 | 15.2 | 15.2 | 15.2 |
| <Thermosetting resin> | | | | | | | | | |
| Phenolic resin | | | | 18.1 | 18.1 | 18.1 | 16.2 | 16.2 | 16.2 |
| <Rubber powder> | | | | | | | | | |
| Vulcanized rubber | | | | | | | 10.2 | | 9.8 |
| Silicone resin | | | | | | | | 10.2 | |
| <Crystalline polyester resin> | | | | | | | | | |
| Damping property Qd (at the time of 200% strain) | | | kN | 24.2 | 23.4 | 23.8 | 25.3 | 25.8 | 22.6 |
| Bearing pressure dependence (ratio with 5 MPa) | Vertical bearing pressure P | | 5 MPa | 1.00 | 1.00 | 1.00 | 1.00 | 1.00 | 1.00 |
| | 10 MPa | | | 1.28 | 1.30 | 1.36 | 1.46 | 1.48 | 1.32 |
| | 15 MPa | | | 1.60 | 1.61 | 1.63 | 1.92 | 1.90 | 1.64 |
| | 20 MPa | | | 1.82 | 1.95 | 1.90 | 2.31 | 2.34 | 2.00 |

**[Table 2]**

| | | | | Examples | | | |
|---|---|---|---|---|---|---|---|
| | | | | 7 | 8 | 9 | 10 |
| < thermally conductive filler> | | av. particle dia. | | | | | |
| MgO | | 10 µm | | | 24.8 | 23.3 | |
| | | 50 µm | | | 37.4 | 35.1 | |
| Al₂O₃ | | 10 µm | | | | | 23.3 |
| | | 50 µm | | | | | 35.1 |
| Si₃N₄ | | 10 µm | | 29.2 | | | |
| SiC | | 10 µm | | 29.2 | | | |
| <Scaly graphite> | | | | | | | |
| av. particle dia.: 650 µm | | | | 15.2 | 16.2 | 14.6 | 14.6 |
| <Thermosetting resin> | | | | | | | |
| Phenolic resin | | | | 16.2 | 17.3 | 15.6 | 15.6 |
| <Rubber powder> | | | | | | | |
| Vulcanized rubber | | | | 10.2 | | 9.8 | 9.8 |
| Silicone resin | | | | | | | |
| <Crystalline polyester resin> | | | | | 4.3 | 3.9 | 3.9 |
| Damping property Qd (at the time of 200% strain) | | | kN | 22.8 | 23.2 | 23.6 | 24.2 |
| Bearing pressure dependence (ratio with 5 MPa) | Vertical bearing pressure P | | 5 MPa | 1.00 | 1.00 | 1.00 | 1.00 |
| | 10 MPa | | | 1.36 | 1.32 | 1.46 | 1.32 |
| | 15 MPa | | | 1.63 | 1.52 | 1.92 | 1.74 |
| | 20 MPa | | | 1.96 | 1.84 | 2.31 | 2.02 |

Then, 23 thin-walled rigid steel plates 4 having an outside diameter of 250 mm and a thickness of 1.4 mm and having rigidity and 24 elastic plates (vulcanized natural rubber: shear modulus of elasticity of rubber G = 0.4 N/mm²) 2 having the same outside diameter of 250 mm and a thickness of 2.0 mm and having elasticity were alternately laminated. Further, the pair of thick-walled rigid steel plates 5 and 6, which each had the same outside diameter of 250 mm and a thickness of 25 mm and respectively had the circular recesses 26 and 28 having a diameter of 70 mm, were respectively disposed on the lower surface and the upper surface of the laminated assembly. Subsequently, 11 disk-like (circular plate-shaped) damping bodies 12 obtained in Examples 1 to 10 and having a diameter of 50 mm a thickness of 10 mm were stacked and press-fitted without a gap into the circularly columnar hollow portion 11 in the central portion of the laminated elastic body (height: 130.2 mm; outside diameter: 250 mm) 8 which was obtained by fixing the aforementioned members to each other by vulcanization under pressure in the mold having an inside diameter of 260 mm and which was cladded with the circularly cylindrical cladding layer 9 with a height of 130.2 mm and a radial thickness of 5 mm, thereby fabricating the seismic isolation apparatus 1 shown in Fig. 1.

With regard to the damping performance, the bearing pressure dependence, and the yield load retention ratio of the seismic isolation apparatus 1, an evaluation was made by the method described below.

### <Damping Performance>

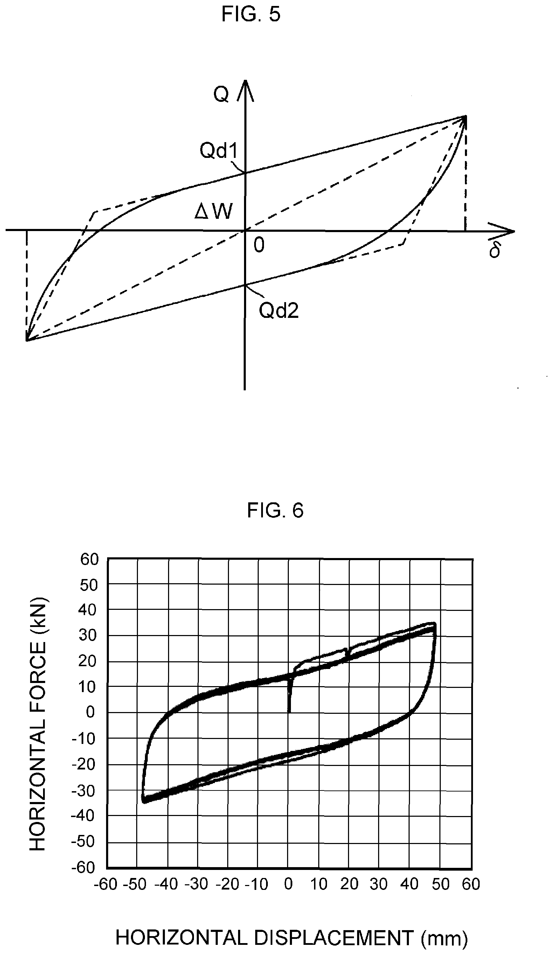

In a state in which respective vertical bearing pressure P of 5 MPa, 10 MPa, 15 MPa, and 20 MPa was being applied to the seismic isolation apparatus 1 in the vertical direction, the seismic isolation apparatus 1 was vibrated at a vibration frequency of 0.33 Hz in the horizontal direction H to cause a horizontal shear deformation (±48 mm = ±100% shear strain). In Fig. 5 illustrating the relationship (horizontal restoring force characteristics diagram) between the horizontal displacement (abscissa axis δ) of the upper end of the seismic isolation apparatus 1 with respect to the lower end thereof and the horizontal load (horizontal force) (ordinate axis Q) of the seismic isolation apparatus 1, it is meant that the wider the area ΔW of the region surrounded by the hysteresis curve (solid line), the more the vibrational energy can be absorbed. Here, an evaluation was made of the damping performance of the circularly columnar body 14 by an intercept load (yield load) Qd (a value calculated from Formula: Qd = (Qd1 + |Qd2|) / 2 by using horizontal loads Qd1 and |Qd2| at a point of intersection of the hysteresis curve with the ordinate axis Q) in the horizontal shear deformation, i.e., ±100% shear strain (the greater the intercept load Qd, the wider the area of the region surrounded by the hysteresis curve, which shows that the more the damping performance excels).

### <Bearing Pressure Dependence>

The vertical bearing pressure (vertical load) P of 5 MPa, 10 MPa, 15 MPa, and 20 MPa mentioned earlier was respectively applied to the seismic isolation apparatus 1 to determine the intercept load Qd at each vertical bearing pressure P, the change of the intercept load Qd due to each vertical bearing pressure P of 10 MPa, 15 MPa, and 20 MPa was calculated by a radio (multiplying factor) with the intercept load Qd at the vertical bearing pressure of 5 MPa set as 1.00, and the bearing pressure dependence was evaluated by this ratio. The seismic isolation apparatus 1 in which this ratio increases with an increase in the vertical bearing pressure P generates an intercept load Qd corresponding to the vertical bearing pressure P, and has the characteristics of being able to exhibit a vibration isolating effect corresponding to superstructures varying in the load which is supported.

As can be appreciated from Tables 1 and 2, which illustrate test results on bearing surface dependence, with the seismic isolation apparatuses 1 respectively having the circularly columnar body 14 constituted of the damping body materials shown in Tables 1 and 2, the intercept load Qd increased with an increase in the vertical bearing pressure P, specifically such that the ratio between the intercept load Q at each vertical bearing surface P and the intercept load at the vertical bearing pressure of 5 MPa was 1.28 to 1.48 at 10 MPa, i.e., two times the vertical bearing pressure P of 5 MPa, was 1.52 to 1.92 at 15 MPa, i.e., three times the vertical bearing pressure P of 5 MPa, and was 1.82 to 2.31 at 20 MPa, i.e., four times the vertical bearing pressure P of 5 MPa; thus, the value of the intercept load Qd increased in correspondence with the vertical bearing pressure P, making it possible to obtain a vibration isolating effect corresponding to the loading capacity, i.e., the vertical bearing pressure P. Fig. 6 illustrates test results (hysteresis curves) on the horizontal restoring force characteristics, i.e., the relationship between the horizontal displacement δ (mm) and the horizontal load (horizontal force) Q (kN) in the seismic isolation apparatus 1 having the circularly columnar body 14 shown in Example 6.

The ratio between the intercept load at the vertical bearing pressure of 5 MPa and the intercept load at each vertical bearing pressure of 10 MPa, 15 MPa, and 20 MPa in a seismic isolation apparatus having a circularly columnar lead (lead plug) in substitution for the circularly columnar body 14 was 1.02 at the vertical bearing pressure of 10 MPa, 1.04 at the vertical bearing pressure of 15 MPa, and 1.06 at the vertical bearing pressure of 20 MPa, so that with the seismic isolation apparatus having the lead plug, even if the load which was supported differed, the intercept load did not practically change, and therefore the seismic isolation apparatus with such a lead plug press-fitted therein is inferior to the seismic isolation apparatuses 1 of the present Examples in the light of the bearing pressure dependence which exhibits the vibration isolating effect corresponding to superstructures different in the load.

### <Number of Vibrations and Retention Rate of Energy Absorbing Performance (Yield Load Retention Ratio)>

A test was conducted in which the seismic isolation apparatus 1 was subjected to repeated vibration (1) at a horizontal deformation rate of 100% and at 0.1 Hz and (2) at a horizontal deformation rate of 300% and at 0.33 Hz, and the retention rate of energy absorbing performance was determined as the yield load retention ratio (= Qdn/Qd1, where Qd1 is the value of the intercept load Qd in a first vibration, and Qdn is the value of the intercept load Qd in an n-th vibration).

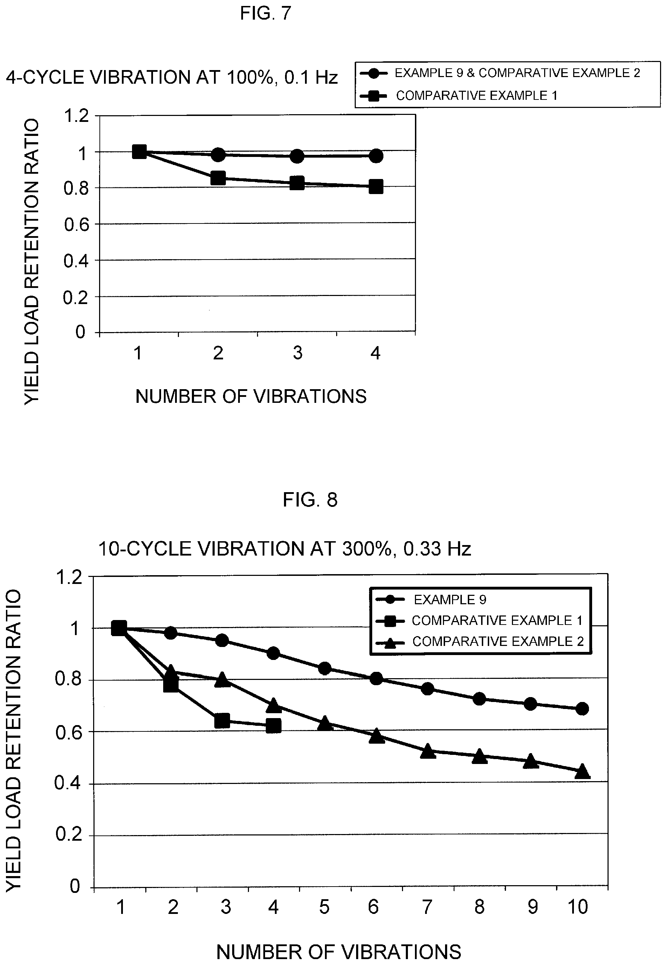

In a 4-cycle vibration test at the horizontal deformation rate of 100% and at the frequency of 0.1 Hz, from the test results shown in Fig. 7 a large difference in performance was noted between the seismic isolation apparatuses of Example 9 and Comparative Examples 1 and 2. However, in a 10-cycle vibration test at the horizontal deformation rate of 300% and at the frequency of 0.33 Hz, it can be appreciated from the test results shown in Fig. 8 that, in the case of the seismic isolation apparatus 1 of Example 9, the rate of change of the yield load is small, and the performance is stable with respect to repeated vibration in long-period earthquakes.

The seismic isolation apparatus of Comparative Example 1 used in the test was a seismic isolation apparatus in which, in substitution of the circularly columnar body 14, a lead plug was press-fitted in the circularly columnar hollow portion 11 in the central portion of the laminated elastic body 8, while the seismic isolation apparatus of Comparative Example 2 was a seismic isolation apparatus in which, in substitution of the lead plug, a circularly columnar body obtained by compression-molding a damping body material constituted of a thermally conductive filler, a scaly graphite, a vulcanized rubber powder, a crystalline polyester resin, and a coumarone resin was press-fitted.

It should be noted that confirmation was made that similar effects to those described above can be obtained also by the seismic isolation apparatus 1 in which the circularly columnar body 14 constituted by a single damping body 12 is press-fitted in the circularly columnar hollow portion 11.

### DESCRIPTION OF REFERENCE NUMERALS

1: seismic isolation apparatus
2: elastic plate
3: elastic layer
4: thin-walled rigid steel plate
5, 6: thick-walled rigid steel plate
7: rigid layer
8: laminated elastic body
9: cladding layer
10: inner peripheral surface
11: circularly columnar hollow portion
12: damping body
14: circularly columnar body

## Claims

1. A seismic isolation apparatus comprising: a laminated elastic body in which rigid layers and elastic layers are alternately laminated and a columnar body constituted by a damping body and disposed in at least one columnar hollow portion defined by an inner peripheral surface of at least said laminated elastic body, wherein the damping body contains a thermally conductive filler, a graphite, and a thermosetting resin.

2. A seismic isolation apparatus comprising: a laminated elastic body in which rigid layers and elastic layers are alternately laminated and a columnar body which is disposed in at least one columnar hollow portion defined by an inner peripheral surface of at least said laminated elastic body and is constituted by a plurality of damping bodies laminated in an axial direction of the columnar hollow portion, wherein the damping body contains a thermally conductive filler, a graphite, and a thermosetting resin.

3. The seismic isolation apparatus according to claim 1 or 2, wherein the damping body contains 35 to 70 vol.% of the thermally conductive filler, 5 to 50 vol.% of the graphite, and 10 to 30 vol.% of the thermosetting resin.

4. The seismic isolation apparatus according to any one of claims 1 to 3, wherein the thermally conductive filler includes one kind or two or more kinds of particles of a metal oxide, a metal nitride, a metal carbide, and a metal hydroxide.

5. The seismic isolation apparatus according to any one of claims 1 to 4, wherein the graphite is constituted by at least one of an artificial graphite and a natural graphite.

6. The seismic isolation apparatus according to any one of claims 1 to 5, wherein the thermosetting resin includes a phenolic resin.

7. The seismic isolation apparatus according to any one of claims 1 to 6, wherein the damping body further contains at least one of a rubber powder and a crystalline polyester resin.

8. The seismic isolation apparatus according to claim 7, wherein the damping body contains at least one of not more than 40 vol.% of the rubber powder and not more than 25 vol.% of the crystalline polyester resin.

9. The seismic isolation apparatus according to claim 7 or 8, wherein the rubber powder is constituted by at least one of a vulcanized rubber powder and a silicone rubber powder.

10. The seismic isolation apparatus according any one of claims 1 to 9, wherein said columnar body is adapted to support a load in a laminated direction together with said laminated elastic body.
